Europäisches Patentamt

European Patent Office

Office européen des brevets

(19)

(11) Veröffentlichungsnummer: **0 134 567**
**A2**

(12) **EUROPÄISCHE PATENTANMELDUNG**

(21) Anmeldenummer: **84109930.2**

(22) Anmeldetag: **21.08.84**

(51) Int. Cl.⁴: **B 60 R 22/38**

(30) Priorität: **30.08.83 DE 3331111**

(43) Veröffentlichungstag der Anmeldung:
**20.03.85 Patentblatt 85/12**

(84) Benannte Vertragsstaaten:
**FR GB IT SE**

(71) Anmelder: **AUTOFLUG GMBH**
**Industriestrasse 10 Postfach 1180**
**D-2084 Rellingen(DE)**

(72) Erfinder: **Butenop, Klaus**
**Obendeich 29**
**D-2209 Herzhorn(DE)**

(74) Vertreter: **Kühnemann, Klaus**
**Sonderburgstrasse 36**
**D-4000 Düsseldorf 11(DE)**

(54) **Selbstsperrender Gurtaufroller für insbesondere Kraftfahrzeug-Sicherheitsgurte.**

(57) Bei einem selbstsperrenden Gurtaufroller für insbesondere Kraftfahrzeug-Sicherheitsgurte, mit einer rückspulenden Gurtaufwickelwelle, die an beiden Enden je eine Sperreinrichtung hat, bei der ein Sperrglied, radial von innen nach außen wirkend, mit einer Verzahnung am Gehäuse in Eingriff gelangt, wobei die Sperrglieder durch eine der Wellenachse parallele, innerhalb des Querschnittes angeordnete und mit umlaufende Verbindungsstange gekoppelt sind, besteht das Problem einer günstigen Drehmomentenübertragung bei kleiner Baugröße und gleichmäßiger Ansprechschwelle während des Wellenumlaufes. Zur Lösung der Aufgabe, dieses Problem zu beherrschen, ist vorgesehen, daß die Sperrglieder (27) zwei Kraftübertragungspunkte zur Gurtaufwickelwelle haben und exzentrisch beweglich an ihrem jeweiligen Exzenterpunkt (E; 32) gelagert sind sowie daß die Verbindungsstange zwischen den Sperrgliedern außerhalb von deren Exzenterpunkt (E) angeordnet und mit den Sperrgliedern auf einer Teilkreisbahn (34) schwenkbeweglich ist.

./...

EP 0 134 567 A2

Fig.1

Patentanwälte
Dipl.-Ing. Klaus Kühnemann
Dr.-Ing. Karl-Ernst Müller
Sonderburgstraße 36
4000 Düsseldorf 11
Telefon (02 11) 57 55 55
Postgirokonto: Köln 794 14 -501

Düsseldorf, den 20. August 1984
KK/sch 5

**0134567**

Autoflug GmbH
Industriestraße 10
2084 Rellingen 2

B e s c h r e i b u n g

Selbstsperrender Gurtaufroller für insbesondere
Kraftfahrzeug-Sicherheitsgurte

Die Erfindung betrifft einen selbstsperrenden Gurtaufroller für insbesondere Kraftfahrzeug-Sicherheitsgurte,
mit einer in einem Gehäuse gelagerten, von einer
Rückspulfeder beaufschlagten Gurtaufwickelwelle,
der an jedem Wellenende ein radial von innen nach
außen wirkendes, von gehäusefesten Anschlägen umgebenes
Sperrglied zugeordnet ist, wobei die Sperrglieder
durch eine der Wellenachse parallele, innerhalb des
Wellenquerschnittes angeordnete und mit der Welle umlaufende Verbindungsstange gekoppelt sind und mit
den gehäusefesten Anschlägen in Eingriff gelangen, wenn
die Selbstsperrung ausgelöst wird.

Ein selbstsperrender Gurtaufroller mit den vorgenannten
Gattungsmerkmalen ist durch die DE-OS 28 26 286 bekannt.

Dabei sind die Sperrglieder als einarmige Hebel ausgebildet, deren eines Ende jeweils an der Verbindungsstange befestigt ist, so daß die Sperrglieder
im Exzenterpunkt schwenkbeweglich gelagert sind. Da
diese Lagerung außerhalb der Mittenachse der Gurtaufwickelwelle geschieht, ergibt sich ein Kniehebelsystem mit entsprechend ungünstiger Drehmomentübertragung. Ein weiterer Nachteil der bekannten Ausführung besteht darin, daß das System über keine
gleichmäßige Ansprechschwelle für die Selbstsperrung
verfügt.

Bei anderen bekannten Gurtaufrollern mit doppelseitiger
Sperrung trägt die Gurtaufwickelwelle bzw. deren
Spulenteil beiderseits des Gurtbandwickels innerhalb
des Gehäuses je ein scheibenförmiges Sperrklinkenrad
mit über den Umfang verteilten Zähnen, in die eine
Sperrklinke mit sog. Greifern einrastbar ist, wenn
die Selbstsperrung ausgelöst wird. Dabei besteht die
Sperrklinke mit den Greifern aus einem flachen Stahlbalken, der außerhalb des Umfanges der Sperrklinkenräder an Gehäuseschenkeln derart kippbeweglich gelagert
ist, daß die Greifer bei eingekippter Stellung des
Balkens an je einen Zahn der beiden  Sperrklinkenräder anschlagen und dadurch die Welle blockieren.
Damit wirkt der Blockiervorgang, bezogen auf die Welle,
von außen nach innen, und das Gehäuse des Gurtaufrollers
wird nicht nur voll in die sich ergebende Kraftübertragung einbezogen, sondern es ergibt sich auch ein
vergleichsweise großer Hebelarm mit der Folge einer entsprechend starken Auslegung der Teile. Dies steht im
Widerspruch zur Forderung der Kraftfahrzeughersteller
nach immer kleineren und leichteren Gurtaufrollern,
die natürlich trotzdem den bei einem Unfall auftretenden Belastungen gewachsen sein müssen.

Die zuletzt beschriebenen Gurtaufroller ergeben sich im wesentlichen aus den DE-OS 25 55 994 und 25 56 400. In der DE-AS 23 42 343 ist noch ein entsprechender Gurtaufroller beschrieben, bei dem die Sperrklinke nicht als flacher Balken mit einstückig daran angeformten Greifern ausgebildet ist, vielmehr sind die Greifer hier getrennte Bauteile, die wie bei dem an erster Stelle beschriebenen Aufrollautomat durch eine Achse miteinander verbunden sind.

Der Erfindung liegt die Aufgabe zugrunde, einen selbstsperrenden Gurtaufroller mit den eingangs genannten Gattungsmerkmalen zu schaffen, welcher eine günstige Übertragung der Drehmomente ermöglicht und sehr kompakt und gewichtsmäßig leicht gestaltet werden kann. Eine besondere Aufgabe ist die gleichmäßige Ansprechschwelle des Gurtaufrollers.

Die erfindungsgemäße Lösung dieser Aufgabe ergibt sich einschließlich vorteilhafter Ausgestaltungen und Weiterbildungen aus dem Inhalt der Patentansprüche, welcher dieser Beschreibung vorangestellt sind.

Mit der Erfindung ist der Vorteil verbunden, daß selbstsperrende Gurtaufroller von sehr geringer Bauhöhe hergestellt werden können, wie sie beispielsweise für Beckengurte und passive Gurtsysteme benötigt werden. Da das Gehäuse gleichmäßig belastet wird, kann die Materialstärke vergleichsweise gering sein, wodurch sich unter anderem eine verbesserte Stanzfähigkeit ergibt. Weiterhin wird die Ansprechschwelle wesentlich verbessert. Schließlich besteht die Möglichkeit, auf beiden Seiten der Gurtaufwickelwelle die gleichen Bauteile für die Sperrung einzusetzen, womit die Fertigung einschließlich der Lagerhaltung rationalisiert wird.

In der Zeichnung sind Ausführungsbeispiele der Erfindung wiedergegeben, welche nachstehend beschrieben werden.
Es zeigen:

Fig. 1    eine Ansicht auf einen Axialschnitt durch einen Gurtaufroller mit synoptischer Ansicht eines Wellenquerschnittes,

Fig. 2    die sog. Systemseite des Gurtaufrollers mit durch eine senkrechte Mittenlinie geteilter Ansicht auf zwei Ebenen dieser Seite, im gesperrten Zustand,

Fig. 3    eine Ansicht auf die mit der Rückspulfeder versehene Seite des Gurtaufrollers, und zwar auf eine unter der Rückspulfeder gelegene Ebene, im gesperrten Zustand,

Fig. 4    eine Ansicht entsprechend Fig. 3, aber im entsperrten Zustand.

Der Gurtaufroller hat ein herkömmliches U-förmiges Gehäuse 10 mit U-Schenkeln 11, 12, zwischen denen eine Gurtaufwickelwelle 13 gelagert ist, auf die das Gurtband 14 in Form eines Wickels aufgespult wird. Die Gurtaufwickelwelle 13 ist aus mehreren Bauteilen zusammengesetzt; sie enthält einen flach-rechteckigen Stahlkern 15 und einen Kunststoffkörper 16, der die Welle mit ihrem Kern walzenförmig auffüllt. Die Welle 13 hat einen diametralen Längsschlitz 17 zur Befestigung des nicht dargestellten Gurtbandendes. Auch eine einstückige Welle, z. B. aus Druckguß, kann zur Anwendung gelangen.

Auf der Seite des Gehäuseschenkels 11 ist eine Rückspulfeder 18 angeordnet, deren Herzwindung mit dem diesseitigen Wellenende 19 auf nicht näher dargestellte Weise verbunden ist. Die Feder 18 befindet sich in einem einseitig offenen Federgehäuse 20 mit geschlossenem Boden 21, der in der Mitte eine Öffnung zum Durchlaß des Wellenendes 19 hat. Die Rückspulfeder 18 und die ihr zugeordneten Teile werden durch eine Kunststoffkappe 22 abgedeckt.

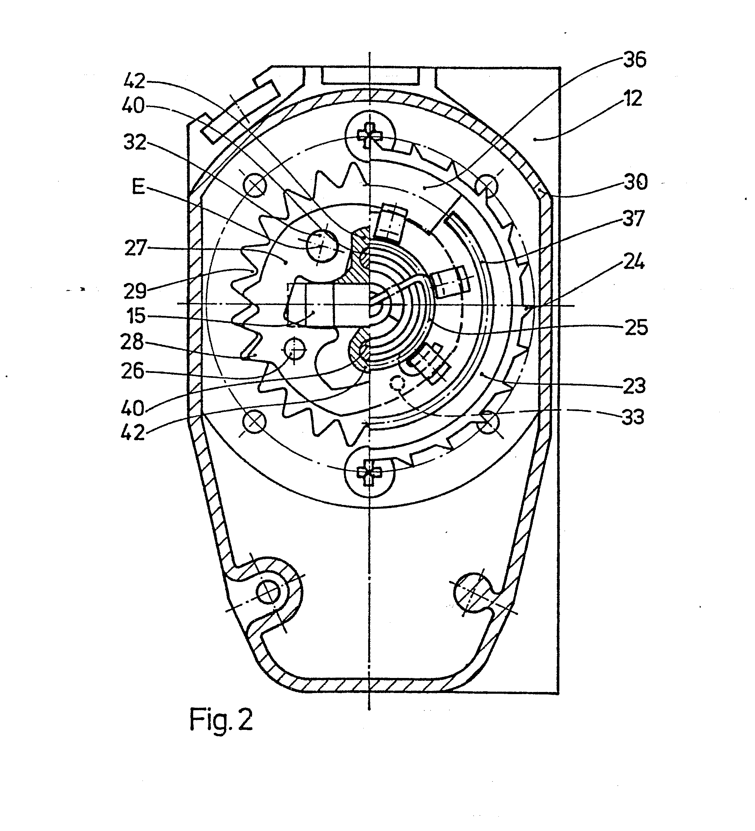

Auf der Seite des Gehäuseschenkels 12 sind diejenigen Bauteile angeordnet, welche zur Auslösung der Selbstsperrung des Gurtaufrollers bestimmt und eingerichtet sind. Diese Seite wird deshalb auch "Systemseite" genannt. Das Sperrsystem umfaßt im wesentlichen eine Trägheitsscheibe 23 mit Umfangsverzahnung 24 und g-Wert-Feder 25, durch welche der Beginn des Nacheilens der Trägheitsscheibe 23 gegenüber der Welle 13 kontrolliert wird. Das Nacheilen kann entweder durch eine bestimmte Abwickelbeschleunigung des Gurtbandes 14 oder durch den Angriff eines nicht dargestellten, auf Fahrzeugbeschleunigungen ansprechenden Sensors an der Verzahnung 24 bewirkt werden, wodurch es über einen im Trägheitselement 23 beweglich geführten Steuerzapfen 26 zur radialen Auslenkung eines scheibenförmigen Sperrgliedes 27 kommt, welches mit Zähnen 28 in die umgebenden Zähne eines innenverzahnten Druckringes 29 eingreift (Fig. 2) und dadurch die Blockierung der Welle 13 hervorruft. Zum Schutz dieses Systems ist eine Abdeckkappe 30 vorgesehen.

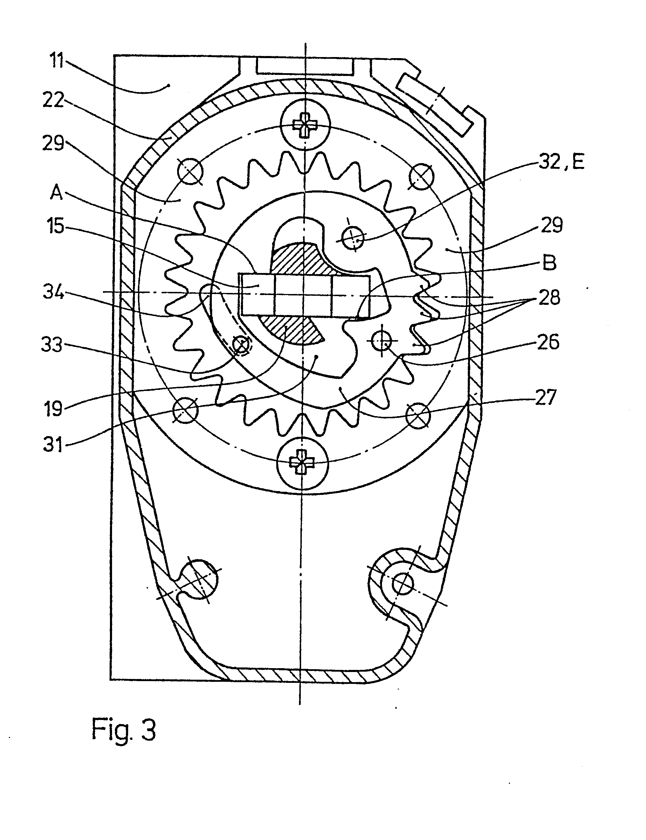

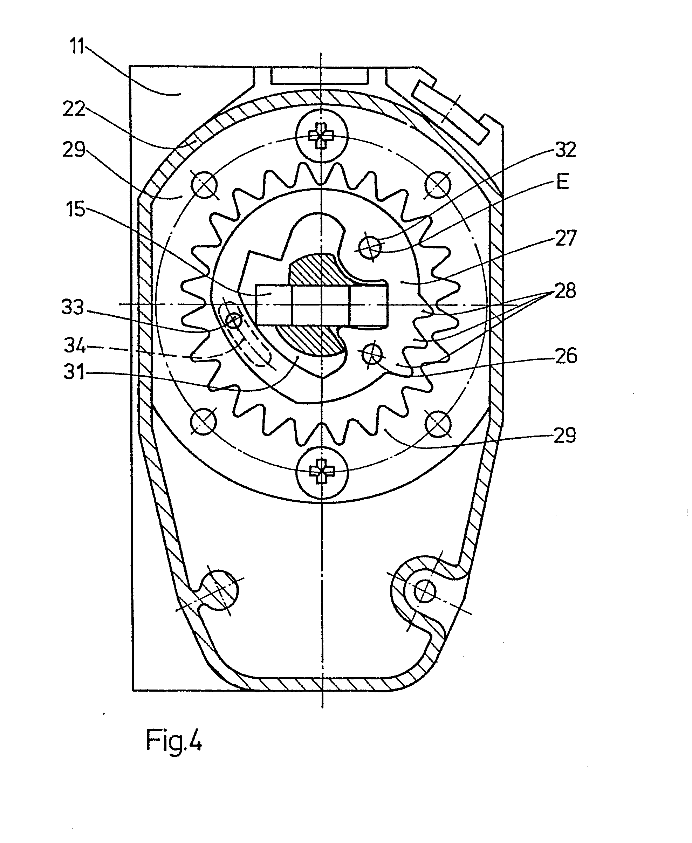

Das scheibenförmige Sperrglied 27 mit Zähnen 28 ist als flaches Stanzteil mit durchgeprägtem Zapfen 26 ausgebildet und hat eine Mittenöffnung 31 von differenziert gegliederter Gestalt, mit der es das zugeordnete Ende des Stahlkernes 15 der Welle 13 in bestimmten Grenzen frei beweglich übergreift. Dabei läuft das Sperrglied 27 in der jeweiligen Drehrichtung mit der Welle 13 um. Durch eine exzentrische, gewissermaßen pendelnde Lagerung des Sperrgliedes 27 auf einem an der Stirnseite der Welle 13 sitzenden Zapfen 32 im Exzenterpunkt E kann das Sperrglied 27 auf dem Wellenende entweder eine nach innen, d. h. zur Wellenachse hin orientierte Stellung einnehmen, bei der seine Zähne 28 die Innenverzahnung des Druckringes 29 nicht berühren (Fig. 4), oder eine radial nach außen orientierte Stellung, wie sie in den Figuren 2 und 3 wiedergegeben ist, bei der die Zähne 28 in die Verzahnung des Druckringes 29 eingreifen und ein weiteres Rotieren der Welle 13 mit dem Sperrglied 27 unmöglich machen.

Wie sich besonders deutlich aus Figur 3 entnehmen läßt, findet die Übertragung des Drehmomentes von der Welle 13, an der das Gurtband 14 bei einem Unfall zieht, über den Stahlkern 15 und die beiderseitigen Sperrglieder 27 mit Zähnen 28 auf die Druckringe 29 und damit auf das fahrzeugfeste Gehäuse 10 in einer Weise statt, daß die beiderseitigen Exzenterpunkte E bzw. die Zapfen 32 zur exzentrischen Lagerung der Sperrglieder 27 weitestgehend unbelastet bleiben. Die bei der Drehmomentenübertragung auftretenden Kräfte werden vielmehr an jedem Wellenende mittels zweier Anlagepunkte des Stahlkernes 15 an ungefähr einander gegenüberliegenden Kanten der Mittenöffnung 31 des Sperrgliedes 27 weitergeleitet, indem sich das Stahlkernende in der Mittenöffnung des mit dem Druckring 29 verzahnten Sperrgliedes 27 verklemmt. Bei Betrachtung von Figur 3 sind die Anlagepunkte A, B.zwischen Stahlkern und Sperrglied links oben und rechts unten
am Stahlkern 15 zu erkennen. Dabei findet der Zug
des hier nicht dargestellten Gurtbandes an der Welle 13
mit Stahlkern 15 in einer solchen Richtung statt, daß
sich die Welle 13 mit ihrem Stahlkern in Uhrzeigerrichtung zu drehen bestrebt ist. Unter Berücksichtigung
dessen wird verständlich, daß am Exzenterpunkt E bzw.
am Zapfen 32 praktisch keine Kräfte des Drehmomentes
wirksam werden.

Außer der Lagerung des Sperrgliedes 27 auf dem Zapfen
32 im Exzenterpunkt E ist noch eine Kupplungs- und
Führungsstelle am Sperrglied 27 vorgesehen, die mit
Abstand von dem Zapfen 32 bzw. vom Exzenterpunkt E
angeordnet ist, und zwar das zapfenförmige Ende einer
Verbindungsstange 33, die verdrehfest in das Sperrglied 27 eingepaßt ist. Die Verbindungsstange 33 hat
einen vorzugsweise kreisförmigen Querschnitt und ist
in einem teilkreisförmigen Längsschlitz 34 der Gurtaufwickelwelle 13 derart gelagert, daß sie sich darin hin-
und herbewegen kann. Der Schlitz 34 befindet sich im
Kunststoffkörper 16 der Welle 13, sein Radius geht
vom Exzenterpunkt E aus.

Auf der Seite des Gehäuseschenkels 11 und der Rückspulfeder 18 ist an dem dortigen Ende der Welle 13 ebenfalls
ein Sperrglied 27 auf einem Zapfen 32 in seinem Exzenterpunkt E gelagert, welches ebenso scheibenförmig ausgebildet ist wie das Sperrglied 27 auf der Systemseite,
so daß sich diesbezüglich eine symmetrische Bauweise
ergibt. Auch das Sperrglied 27 auf der Seite des Gehäuseschenkels 11 ist von einem Druckring 29 umgeben, welcher
baulich mit dem Druckring 29 auf der Systemseite übereinstimmen kann, so daß also nur eine Sorte Sperrglied und Druckring für diesen Gurtaufroller beigestellt zu werden braucht. Dabei sind die Zähne des Druckringes 29, wie sich z. B. aus Figur 3 ergibt, symmetrisch ausgeformt, damit sie in beiden Drehrichtungen der Welle 13 beansprucht werden können.

Die beiden scheibenförmigen Sperrglieder 27 sind durch die Verbindungsstange 33 fest miteinander verbunden, so daß sie nur gemeinsame, gleiche Bewegungen um die Zapfen 32 ausführen können. Die Verbindungsstange 33 verläuft mit ihrer Längsachse nicht durch die Exzenterpunkte E der Sperrglieder 27, sondern mit Abstand außerhalb davon. Trotzdem sind die beiden Sperrglieder 27 durch die Verbindungsstange 33 so starr gekoppelt, daß sie ihre radialen Sperr- oder Entsperrbewegungen nur gemeinsam, d. h. absolut synchron ausführen können. Dabei vollführt die Verbindungsstange 33 mit den radialen Bewegungen der Sperrglieder 27 hin- und hergehende Bewegungen längs einer teilkreisförmigen Bahn, wozu ein entsprechender Raum im Innern der Gurtaufwickelwelle 13 vorhanden ist, und zwar ist hierfür der teilkreisförmige Längsschlitz 34 vorgesehen, in dem sich die Verbindungsstange 33 frei bewegen kann. Dieser Längsschlitz 34 befindet sich außerhalb des Befestigungsschlitzes 7 für das Gurtband 14.

Da der Schwerpunkt der aus den beiden scheibenförmigen Sperrgliedern 27 und der Verbindungsstange 33 zusammengesetzten Baueinheit aufgrund der erforderlichen konstruktiven Ausbildung der Sperrglieder nicht im Exzenterpunkt E liegen kann, ist als Massenausgleich ein Auswuchtgewicht 36 vorgesehen, welches am Umfang des Trägheitselementes 23 angebracht ist. Hierdurch wird eine statische und dynamische Auswuchtung des Gesamtsystems erreicht, und der Einfluß der Erdbeschleunigung sowie der Drehbewegung bzw. Zentrifugalkraft auf die Einleitung des Blockiervorganges wird ausgeschaltet. Wie sich aus Figur 2 entnehmen läßt, kann das Auswuchtgewicht 36 beispielsweise aus einem Drahtringstück, welches entsprechend der Form des Trägheitselementes 23 gekrümmt ist, bestehen. Eine ebenfalls ringteilförmig gekrümmte Rippe 37 am Boden des Trägheitselementes 23 verhindert eine falsche Montage des Drahtstückes 36, d. h. das Drahtstück kann nur an der vorbestimmten Stelle montiert werden.

Während auf der Seite des Gehäuseschenkels 11 mit der dort angeordneten Rückspulfeder 18 eine Abdeckung der die Blockierung bewirkenden Bauteile 27 und 29 durch das Federgehäuse 20 mit Boden 21 erfolgt, indem das Federgehäuse 20 auf den Druckring 29 aufgesetzt und an diesem oder am Gehäuse auf nicht näher dargestellte Weise befestigt ist, wird das Sperrglied 27 auf der Systemseite beim Gehäuseschenkel 12 zwar vom Trägheitselement 23 überdeckt, aber dort müssen auch noch Halterungsaufgaben für das Trägheitselement 23 erfüllt werden. Hierzu dienen systemseitige Vorsprünge 42 an der Stirnfläche der Welle 13 als Anbringungsstellen für ein Ansatzstück 38 zur Welle 13, welches sich mit der Welle 13 dreht und zur Halterung und beweglichen Lagerung des Trägheitselementes 23 dient. Dieses Ansatzstück 38 hat einen Flansch 39, der auf den Vorsprüngen 42 auflagert und im übrigen mit zwei Zapfen 40 im Kunststoffkörper 16 der Welle 13 sitzt. Die Zapfen 40 sind mit dem Kunststoffkörper 16 der Welle 13 fest verbunden, z. B. durch HF-Schweißen.

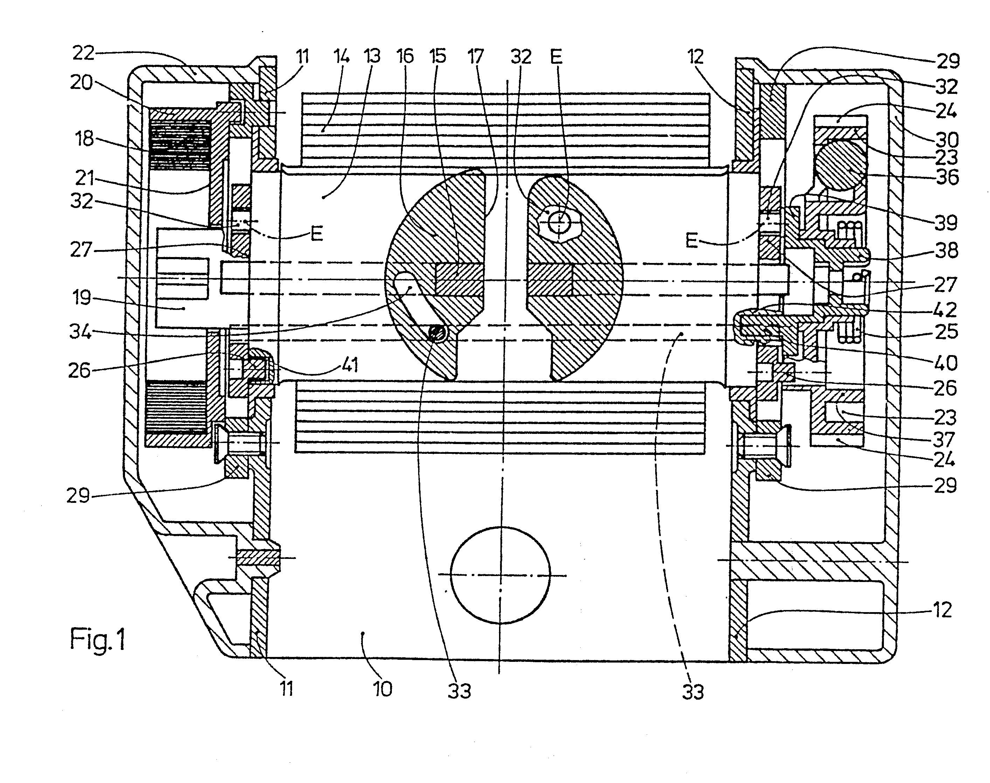

Auf der Seite des Gehäuseschenkels 11 ist zwecks Verwendung eines gleichen Sperrgliedes 27 wie auf der gegenüberliegenden Systemseite für den durchgeprägten Steuerzapfen 26 des Sperrgliedes, welcher auf dieser Seite des Gerätes mangels eines steuernden Trägheitselementes nicht benötigt wird, ein teilkreisförmig gebogener Schlitz 41 (Fig. 1) in der Stirnfläche des Kunststoffkörpers 16 der Welle 13 eingeschnitten.

Die in der vorstehenden Beschreibung und in den Patentansprüchen, in der nachfolgenden Zusammenfassung und in der Zeichnung offenbarten Merkmale können sowohl einzeln als auch in beliebigen Kombinationen untereinander für die Verwirklichung der Erfindung in ihren verschiedenen Ausführungsformen wesentlich sein.

Patentansprüche

Patentansprüche

1. Selbstsperrender Gurtaufroller für insbesondere
Kraftfahrzeug-Sicherheitsgurte, mit einer in einem
Gehäuse gelagerten, von einer Rückspulfeder beaufschlagten Gurtaufwickelwelle, der an jedem
Wellende ein radial von innen nach außen wirkendes,
von gehäusefesten Anschlägen umgebenes Sperrglied
zugeordnet ist, wobei die Sperrglieder durch eine
der Wellenachse parallele, innerhalb des Wellenquerschnittes angeordnete und mit der Welle umlaufende Verbindungsstange gekoppelt sind und mit den
gehäusefesten Anschlägen in Eingriff gelangen, wenn
die Selbstsperrung ausgelöst wird, dadurch gekennzeichnet, daß die Sperrglieder (27) in an sich bekannter Weise zwei Kraftübertragungspunkte zur Gurtaufwickelwelle (13) aufweisen und exzentrisch beweglich an ihrem jeweiligen Exzenterpunkt (E; 32) gelagert sind und daß die Verbindungsstange (33) zwischen den Sperrgliedern (27) außerhalb von deren Exzenterpunkt (E) angeordnet und mit den Sperrgliedern (27) auf einer Teilkreisbahn (34) schwenkbeweglich ist.

2. Gurtaufroller nach Anspruch 1, dadurch gekennzeichnet, daß die Gurtaufwickelwelle (13), durch die sich die Verbindungsstange (33) erstreckt, im Querschnitt gesehen eine teilkreisförmige, schlitzartige Ausnehmung (34) aufweist, in der die Verbindungsstange (33) hin- und herbeweglich ist.

3. Gurtaufroller nach Anspruch 1, dadurch gekennzeichnet, daß die als Sperrglieder (27) und gehäusefeste Anschläge (29) dienenden Bauteile bezüglich ihrer Vorder- und Rückseiten symmetrisch gestaltet und spiegelbildlich an Gurtaufwickelwelle (13), Verbindungsstange (33) und Gehäuse (10) angeordnet sind.

4. Gurtaufroller, insbesondere nach wenigstens einem der vorangehenden Ansprüche, dadurch gekennzeichnet, daß das aus der Trägheitsmasse (23), den beiden Sperrgliedern (27) und der Verbindungsstange (33) bestehende System durch Zuordnung einer Masse (36) statisch und dynamisch ausgewuchtet ist.

5. Gurtaufroller nach Anspruch 4, dadurch gekennzeichnet, daß als Massenausgleich ein Auswuchtgewicht (36) an dem an einem Ende der Gurtaufwickelwelle (13) mitumlaufend gelagerten Trägheitselement (23) angebracht ist.

Zusammenfassung

Fig.1

Fig. 2

Fig. 3

Fig.4